# EUROPÄISCHE PATENTANMELDUNG

(11) **EP 3 536 587 A1**
(43) Veröffentlichungstag der Anmeldung: **11.09.2019**
(21) Anmeldenummer: 18160872.0
(22) Anmeldetag: 09.03.2018
(51) Int. Cl.: B62D 35/00

(54) **KRAFTFAHRZEUG-LUFTLEITVORRICHTUNG UND KRAFTFAHRZEUG**

(71) Anmelder: Betterflow GmbH, 52072 Aachen (DE)
(72) Erfinder: BUFFO, Rainer, 50937 Köln (DE); MARTIN, Ingo, 52072 Aachen (DE)
(74) Vertreter: Andrejewski - Honke Patent- und Rechtsanwälte Partnerschaft mbB

(57) **Zusammenfassung**

Kraftfahrzeug-Luftleitvorrichtung mit zumindest einem flächigen Kraftfahrzeug-Luftleitelement (5) aus einem dünnwandigen Material, wobei das Luftleitelement (5) eine Fläche von mindestens 0,05 m² und von maximal 5 m² aufweist. Das Luftleitelement ist hauptsächlich über eine Befestigungsseitenkante (7) an einer Außenfläche (7) und/oder an einer Außenkante (8) des Fahrzeuges anschließbar. Das Luftleitelement ist mit der Maßgabe ausgestaltet und/oder angeschlossen, dass es im Fahrbetrieb des Fahrzeuges unter Einwirkung des Fahrtwindes aus zumindest einer Ruheposition in eine von der Ruheposition verschiedene Fahrtposition überführbar ist.

## Beschreibung

Die Erfindung betrifft eine Kraftfahrzeug-Luftleitvorrichtung mit zumindest einem flächigen Kraftfahrzeug-Luftleitelement für Kraftfahrzeuge - insbesondere für Lastkraftwagen (LKW) und vorzugsweise für Trailer von Lastkraftwagen -, wobei das Luftleitelement eine Fläche von mindestens 0,05 m² und von maximal 5 m² aufweist. Die Erfindung betrifft fernerhin ein Kraftfahrzeug mit einer erfindungsgemäßen Kraftfahrzeug-Luftleitvorrichtung. - Im Fahrbetrieb eines Kraftfahrzeuges, insbesondere eines Lastkraftwagens entstehen in verschiedenen Bereichen bzw. an unterschiedlichen Komponenten des Kraftfahrzeuges unerwünschte Luftverwirbelungen, die den Luftwiderstand des Fahrzeuges in nachteilhafter Weise erhöhen. Man ist bemüht, den Einfluss solcher Luftverwirbelungen möglichst gering zu halten und somit auch den Luftwiderstand bzw. Strömungswiderstand des Fahrzeuges zu reduzieren.

Aus der Praxis sind bereits verschiedene Maßnahmen zur Reduzierung des Luftwiderstandes von Fahrzeugen bekannt. So sind Luftleitvorrichtungen bekannt, die das Fahrzeug bzw. dessen Fahrzeugkomponenten von außen relativ großflächig verkleiden bzw. überdecken. Die Bedeckung bzw. Abschirmung von Fahrzeugkomponenten mit solchen voluminösen Bauteilen ist aber sehr aufwendig und kostspielig. Auch haben diese Luftleitvorrichtungen zumeist nicht den gewünschten Erfolg herbeigeführt. Insoweit besteht Verbesserungsbedarf.

Aus EP 2 765 064 B1 ist bereits eine sehr effektive Strömungsführungsvorrichtung mit Luftleitelementen am Heck eines Lastkraftwagens bzw. am Heck eines Lastkraftwagen-Trailers bekannt. Diese Vorrichtung bzw. diese Maßnahmen haben sich in der Praxis bewährt.

Der Erfindung liegt das technische Problem zugrunde, eine Kraftfahrzeug-Luftleitvorrichtung der eingangs genannten Art anzugeben, mit der der Luftwiderstand eines Kraftfahrzeuges, insbesondere eines Lastkraftwagens auf funktionssichere und effiziente Weise reduziert werden kann und die nichtsdestoweniger auf wenig aufwendige sowie insbesondere auch kostengünstige Weise realisierbar ist. Der Erfindung liegt weiterhin das technische Problem zugrunde, ein Kraftfahrzeug bzw. einen Lastkraftwagen mit einer entsprechenden Luftleitvorrichtung anzugeben.

Zur Lösung dieses technischen Problems lehrt die Erfindung eine Kraftfahrzeug-Luftleitvorrichtung mit zumindest einem flächigen Kraftfahrzeug-Luftleitelement für Kraftfahrzeuge, insbesondere für Lastkraftwagen (LKW) und vorzugsweise für Trailer von Lastkraftwagen (LKW), wobei das Luftleitelement eine Fläche von mindestens 0,05 m² und von maximal 5 m², vorzugsweise von mindestens 0,1 m² und von maximal 3 m² und bevorzugt von mindestens 0,1 m² und von maximal 2 m² aufweist,
wobei das Luftleitelement hauptsächlich über eine Befestigungsseitenkante, an einer Außenfläche und/oder an einer Außenkante des Fahrzeuges angeschlossen bzw. befestigt ist
und wobei das Luftleitelement mit der Maßgabe ausgestaltet und/oder angeschlossen ist, dass es im Fahrbetrieb des Fahrzeuges unter Einwirkung des Fahrtwindes aus zumindest einer Ruheposition in eine von der Ruheposition verschiedene Fahrtposition überführbar ist und zwar vorzugsweise unter Reduzierung des Strömungswiderstandes des Fahrzeuges in die Fahrtposition überführbar ist.

Bei dem erfindungsgemäßen flächigen Luftleitelement handelt es sich somit um ein dynamisches Luftleitelement, das insbesondere erst unter Einwirkung des Fahrtwindes bewegbar und/oder verformbar ist und damit von seiner Ruheposition in seine Fahrtposition überführbar ist. In der Fahrtposition wird durch das Luftleitelement der Luftwiderstand bzw. der Strömungswiderstand des Fahrzeuges reduziert. Diese Reduzierung des Luftwiderstandes bzw. Strömungswiderstandes ist besonders effektiv bei Lastkraftwagen und vor allem an Trailern von Lastkraftwagen. - Die erfindungsgemäßen Luftleitelemente haben auch den Vorteil, dass sie in ihrer Ruheposition gleichsam passiv sind und insbesondere frei hängen, sodass sie bei Reparatur- und/oder Wartungsarbeiten sowie bei langsamen Rangierfahrten des Fahrzeuges nicht stören. Auch können Verschmutzungen oder Vereisungen an den in ihrer Ruheposition vorzugsweise frei hängenden Luftleitelementen effektiv an den Elementen abgleiten, sodass auch die damit verbundenen Probleme effizient reduziert werden können.

Es liegt im Rahmen der Erfindung, dass das Luftleitelement eine Dicke von 0,05 bis 50 mm, vorzugsweise von 0,5 bis 40 mm, bevorzugt von 0,5 bis 30 mm, sehr bevorzugt von 1 bis 20 mm und besonders bevorzugt von 1 bis 10 mm aufweist. - Gemäß einer sehr empfohlenen Ausführungsform der Erfindung besteht das Luftleitelement aus einem flexiblen Material bzw. im Wesentlichen aus einem flexiblen Material. Flexibel meint im Rahmen der Erfindung insbesondere, dass sich das Luftleitelement bzw. die flexiblen Bereiche des Luftleitelementes unter Einwirkung des Fahrtwindes verformen bzw. verformen können und gemäß einer bevorzugten Ausführungsform elastisch verformen bzw. verformen können. Das flexible Material des Luftleitelementes ist vorzugsweise aus der Gruppe "Gummi, Kautschuk, Kunststoff, faserverstärkter und/oder gewebeverstärkter Kunststoff, Metallfolie" ausgewählt. Besonders bevorzugt besteht das Luftleitelement aus einem Gummi, einem Kautschuk oder einem Kunststoff bzw. im Wesentlichen aus einem Gummi, einem Kautschuk oder einem Kunststoff.

Eine Ausführungsform, der im Rahmen der Erfindung besondere Bedeutung zukommt, ist dadurch gekennzeichnet, dass das Luftleitelement unter Einwirkung des Fahrtwindes aus seiner Ruheposition in seine Fahrtposition verschwenkbar ist und zwar um eine Schwenkachse verschwenkbar ist, die vorzugsweise an der Befestigungsseitenkante liegt und sich bevorzugt entlang bzw. parallel zu der Befestigungsseitenkante erstreckt. Insoweit kann das Luftleitelement unter Einwirkung des Fahrtwindes aus seiner Ruheposition in seine Fahrtposition schwenkbar bzw. klappbar sein, wobei in der Fahrtposition der Strömungswiderstand bzw. der Luftwiderstand des Fahrzeuges reduziert wird.

Eine besonders empfohlene Ausführungsform der Erfindung ist dadurch gekennzeichnet, dass das Luftleitelement mit der Maßgabe ausgebildet und/oder anschließbar bzw. angeschlossen ist, dass es bei einer Fahrbewegung des Fahrzeuges bzw. im Fahrbetrieb des Fahrzeuges unter Einwirkung des Fahrtwindes verformbar ist bzw. elastisch verformbar ist und zwar insbesondere unter Reduzierung des Strömungswiderstandes des Fahrzeuges verformbar ist bzw. elastisch verformbar ist.

Eine bevorzugte Ausführungsform der Erfindung zeichnet sich dadurch aus, dass das Luftleitelement unter Einwirkung des Fahrtwindes sowohl aus seiner Ruheposition in seine Fahrtposition um zumindest eine Schwenkachse verschwenkbar ist und zusätzlich bei der Überführung von der Ruheposition in die Fahrtposition verformbar ist bzw. elastisch verformbar ist. In diesem Fall besteht das Luftleitelement zweckmäßigerweise aus einem elastisch verformbaren Gummi, Kautschuk oder Kunststoff bzw. im Wesentlichen aus einem elastisch verformbaren Gummi, Kautschuk oder Kunststoff.

Eine besonders empfohlene Ausführungsform, der im Rahmen der Erfindung ganz besondere Bedeutung zukommt, ist dadurch gekennzeichnet, dass das erfindungsgemäße Luftleitelement lediglich bzw. ausschließlich unter Einwirkung des Fahrtwindes aus seiner Ruheposition in seine Fahrtposition überführbar ist. Damit ist im Rahmen der Erfindung insbesondere gemeint, dass das Luftleitelement ohne Einwirkung von elektrisch und/oder hydraulisch und/oder pneumatisch betriebenen Stellelementen bzw. Aktuatorelementen lediglich unter Einwirkung des Fahrtwindes in die Fahrtposition überführbar ist.

Erfindungsgemäß ist das Luftleitelement der erfindungsgemäßen Luftleitvorrichtung hauptsächlich über eine Befestigungsseitenkante des Luftleitelementes an einer Außenfläche und/oder an einer Außenkante des Fahrzeuges angeschlossen bzw. befestigt. Damit ist im Rahmen der Erfindung insbesondere gemeint, dass das Luftleitelement bei mehreckiger Ausgestaltung hauptsächlich über eine Seitenkante bzw. Befestigungsseitenkante der mehreren Seitenkanten an der Außenfläche bzw. Außenkante des Fahrzeuges angeschlossen bzw. befestigt ist. Bei rechteckiger Ausgestaltung des Luftleitelementes ist beispielsweise gemeint, dass das Luftleitelement hauptsächlich über eine Seitenkante bzw. Befestigungsseitenkante der vier Seitenkanten an der Außenfläche bzw. Außenkante des Fahrzeuges angeschlossen bzw. befestigt ist. Hauptsächlich über eine Befestigungsseitenkante meint dabei im Rahmen der Erfindung insbesondere, dass bezüglich einer Befestigungslänge entlang der Seitenkanten des Luftleitelementes das Luftleitelement über zumindest 80 % dieser Befestigungslänge, bevorzugt über zumindest 90 % und sehr bevorzugt über zumindest 95 % dieser Befestigungslänge über die eine Befestigungsseitenkante an der Außenfläche bzw. Außenkante des Fahrzeuges angeschlossen bzw. befestigt ist. - Die erfindungsgemäße Befestigung über die eine Befestigungsseitenkante schließt nicht aus, dass auch eine Befestigung bzw. ein Anschluss des flächigen Luftleitelementes an seiner Oberseite oder seiner Unterseite erfolgen kann. Unterseite des Luftleitelementes meint dabei insbesondere die Oberfläche des Luftleitelementes, die im Fahrbetrieb des Kraftfahrzeuges dem Erdboden zugewandt ist. Wenn im Rahmen der Erfindung außer einem Anschluss bzw. einer Befestigung über die Befestigungsseitenkante auch ein Anschluss des Luftleitelementes über seine Oberseite oder seine Unterseite möglich ist, dient nach besonders bevorzugter Ausführungsform im Wesentlichen oder lediglich die Unterseite des Luftleitelementes dem Anschluss an das Fahrzeug und die Oberseite des Luftleitelementes ist vorzugsweise anschlussfrei bzw. befestigungsfrei ausgebildet. - Nach einer empfohlenen Ausführungsform der erfindungsgemäßen Luftleitvorrichtung ist das Luftleitelement lediglich über die eine Befestigungsseitenkante oder im Wesentlichen lediglich über die eine Befestigungsseitenkante an einer Außenfläche und/oder an einer Außenkante des Fahrzeuges angeschlossen bzw. befestigt.

Eine besonders bevorzugte Ausführungsform der Erfindung zeichnet sich dadurch aus, dass die Befestigungsseitenkante des Luftleitelementes im montierten Zustand des Luftleitelementes quer zur Fahrzeuglängsachse bzw. quer zur Fahrtrichtung des Fahrzeuges angeordnet ist. Vorzugsweise ist die Befestigungsseitenkante im montierten Zustand des Luftleitelementes senkrecht bzw. im Wesentlichen senkrecht zur Fahrzeuglängsachse bzw. zur Fahrtrichtung angeordnet. Es liegt im Rahmen der Erfindung, dass die Befestigungsseitenkante linear bzw. im Wesentlichen linear ausgebildet ist. - Gemäß einer empfohlenen Ausführungsform ist das Luftleitelement über zumindest 50 %, vorzugsweise über zumindest 60 % und bevorzugt über zumindest 70 % seiner Erstreckung in Richtung der Befestigungsseitenkante an dem Fahrzeug angeschlossen bzw. befestigt.

Nach einer Ausführungsvariante der Erfindung ist das Luftleitelement mit der Befestigungsseitenkante unmittelbar und ohne Zwischenschaltung von Verbindungselementen an dem Fahrzeug angeschlossen bzw. befestigt. Gemäß einer anderen Ausführungsvariante kann das Luftleitelement mit der Befestigungsseitenkante aber auch über zumindest ein Verbindungselement an dem Fahrzeug angeschlossen bzw. befestigt sein. Derartige Verbindungselemente können Verbindungsschellen, Verbindungsscharniere oder dergleichen sein.

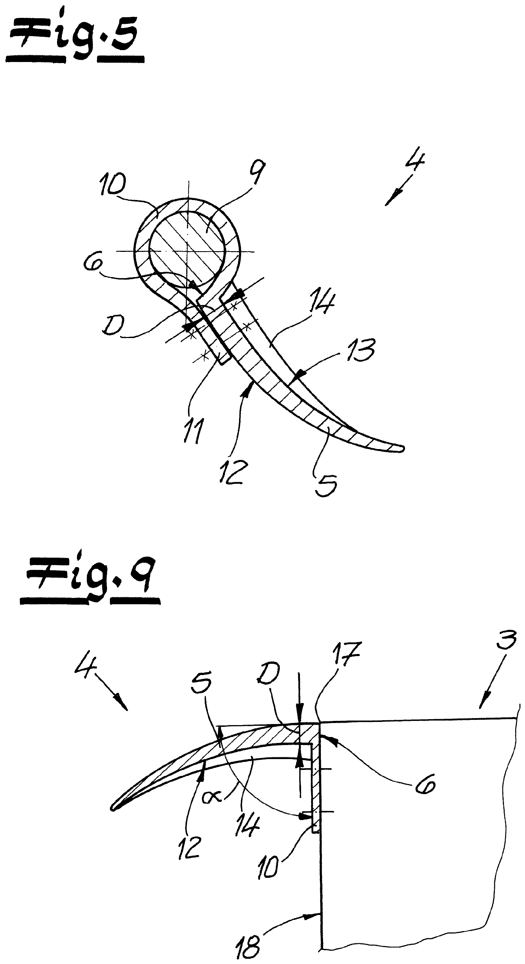

Eine sehr empfohlene Ausführungsform der Erfindung ist dadurch gekennzeichnet, dass die erfindungsgemäße Luftleitvorrichtung das flächige Luftleitelement und ein an der Befestigungsseitenkante des Luftleitelementes angeschlossenes Anschlusselement aufweist, welches Anschlusselement an einer Außenfläche des Fahrzeuges fixierbar ist. Zweckmäßigerweise ist an der Befestigungsseitenkante des flächigen Luftleitelementes ein flächiges Anschlusselement angeschlossen, das - den Anschluss des Luftleitelementes über die Befestigungsseitenkante an dem Fahrzeug gewährleistend - an einer Außenfläche des Fahrzeuges fixierbar ist, vorzugsweise flächig fixierbar ist. Empfohlenermaßen ist im montierten Zustand der Luftleitvorrichtung zumindest in der Fahrtposition des Luftleitelementes das flächige Luftleitelement mit einem Winkel α zu dem Anschlusselement bzw. flächigen Anschlusselement angeordnet, wobei dieser Winkel α mindestens 60°, vorzugsweise mindestens 75° beträgt (s. Fig. 9).

Eine bewährte Ausführungsform der Erfindung zeichnet sich dadurch aus, dass die Luftleitvorrichtung zumindest einen Stabilisierungssteg aufweist, der quer und vorzugsweise senkrecht bzw. im Wesentlichen senkrecht zu der Befestigungsseitenkante des Luftleitelementes angeordnet ist. Der Stabilisierungssteg erstreckt sich bevorzugt von der Befestigungsseitenkante aus über zumindest 50 %, zweckmäßigerweise über zumindest 60 % und bevorzugt über zumindest 70 % der Länge des Luftleitelementes. Gemäß einer empfohlenen Ausführungsform erstreckt sich der Stabilisierungssteg über die gesamte Länge bzw. im Wesentlichen über die gesamte Länge des Luftleitelementes. Die Länge des Luftleitelementes wird dabei parallel zur Fahrzeuglängsachse L des Fahrzeuges gemessen. Zweckmäßigerweise liegt der Stabilisierungssteg zumindest in der Ruheposition oder in der Fahrtposition des Luftleitelementes an der Oberseite oder an der Unterseite des flächigen Luftleitelementes an. Empfohlenermaßen stabilisiert der Stabilisierungssteg das flächige Luftleitelement bezüglich seiner Form und verhindert insbesondere ein Durchhängen oder dergleichen des Luftleitelementes. Ein solcher Stabilisierungssteg hat sich insbesondere bei sehr flexiblen und dünnwandigen flächigen Luftleitelementen bewährt.

Es liegt im Rahmen der Erfindung, dass die Dicke D des flächigen Luftleitelementes insbesondere über die Länge des Luftleitelementes variiert. Zweckmäßigerweise nimmt die Dicke D des flächigen Luftleitelementes von der Befestigungsseitenkante zu der gegenüberliegenden Seitenkante des Luftleitelementes ab und zwar vorzugsweise kontinuierlich ab. Die Dicke D vermindert sich dabei empfohlenermaßen um zumindest 50 %, vorzugsweise um zumindest 60 % und bevorzugt um zumindest 70 %. Die Dicke D des Luftleitelementes wird quer zur Fläche des Luftleitelementes gemessen. Die vorstehend beschriebene Verschlankung des erfindungsgemäßen flächigen Luftleitelementes hat sich im Rahmen der Erfindung besonders bewährt.

Eine sehr empfohlene Ausführungsform, der im Rahmen der Erfindung besondere Bedeutung zukommt, ist dadurch gekennzeichnet, dass zumindest ein flächiges Luftleitelement an zumindest einer Radachse des Fahrzeuges angeschlossen bzw. befestigt ist. Dabei erstreckt sich das flächige Luftleitelement vorzugsweise mit seiner Befestigungsseitenkante entlang der Längsrichtung der Radachse. Es liegt im Rahmen der Erfindung, dass an mehreren Radachsen des Fahrzeuges Luftleitelemente bzw. jeweils ein Luftleitelement angeschlossen bzw. befestigt sind/ist. Wenn nach bevorzugter Ausführungsform an ein flächiges Luftleitelement an der Befestigungsseitenkante ein flächiges Anschlusselement angeschlossen ist, umgreift dieses flächige Anschlusselement vorzugsweise die dem flächigen Luftleitelement zugeordnete Radachse. Dabei kann sich das flächige Anschlusselement über den gesamten Umfang der Radachse erstrecken und das flächige Luftleitelement auf diese Weise an der Radachse fixieren. Die Außenoberfläche der Radachse bildet in diesem Fall die Außenfläche des Fahrzeuges, an der das flächige Luftleitelement angeschlossen ist bzw. über sein flächiges Anschlusselement angeschlossen ist.

Eine weitere empfohlene Ausführungsform, der im Rahmen der Erfindung ganz besondere Bedeutung zukommt, ist dadurch gekennzeichnet, dass das flächige Luftleitelement an einer quer zur Fahrzeuglängsachse bzw. quer zur Fahrtrichtung und bevorzugt senkrecht bzw. im Wesentlichen senkrecht zur Fahrzeuglängsachse bzw. zur Fahrtrichtung angeordneten Dachkante des Fahrzeuges angeschlossen bzw. befestigt ist. Besonders bewährt hat sich dabei eine Ausführungsform, bei der das flächige Luftleitelement an einer Dachkante an der Vorderseite des Fahrzeuges angeschlossen bzw. befestigt ist. Zweckmäßigerweise handelt es sich dabei um die Dachkante an der Vorderseite des Trailers eines Lastkraftwagens. Bei dieser letztgenannten Ausführungsform bildet das flächige Luftleitelement in seiner Fahrtposition vorzugsweise eine trailerseitige Luftleitverlängerung eines auf dem Dach der Zugmaschine des Lastkraftwagens fixierten Windabweisers.

Empfohlenermaßen wird das flächige Luftleitelement im Fahrbetrieb des Trailers durch Luftströmung nach oben angehoben bzw. verschwenkt, so dass es berührend mit dem unterseitigen Bereich des Windabweisers auf dem Dach der Zugmaschine in Kontakt kommt. Der Windabweiser oder die hintere Stirnwand der Zugmaschine können hier auch als Anschlagelement dienen, um das weitere Anheben des flächigen Luftleitelementes zu begrenzen bzw. zu verhindern. Bei der bevorzugt vorgesehenen bündigen Anordnung zwischen dem Windabweiser der Zugmaschine und dem an der vorderen Dachkante des Trailers angeschlossenen flächigen Luftleitelementes kann der Spalt zwischen Zugmaschine und Trailer zumindest größtenteils verschlossen werden und das wirkt sich sehr vorteilhaft auf die Strömungsverhältnisse bzw. auf die Verringerung des Luftwiderstandes des Fahrzeuges aus.

Eine Ausführungsvariante, bei der an der Vorderseite des Trailers eine Kühlvorrichtung vorgesehen ist, ist dadurch gekennzeichnet, dass das an der Dachkante des Trailers angeschlossene flächige Luftleitelement in seiner Fläche einen oder mehrere Spalte, vorzugsweise horizontale Spalte, aufweist. Es liegt im Rahmen der Erfindung, dass sich dadurch der dahinter liegende Abschnitt des Luftleitelementes aufgrund der Strömungskräfte hebt und einen gezielt abwärts gerichteten Kühlluftstrom für die Beatmung der Kühlvorrichtung freigibt. Auf diese Weise wird eine effektive Luftzufuhr zu der Kühlvorrichtung gewährleistet und dieser Luftstrom kann nach einer Ausführungsvariante durch zumindest ein weiteres Leitelement unterstützt werden.

Gemäß besonders empfohlener Ausführungsform der Erfindung erstreckt sich das flächige Luftleitelement der erfindungsgemäßen Luftleitvorrichtung über zumindest 50 %, vorzugsweise über zumindest 60 % und bevorzugt über zumindest 70 % sowie sehr bevorzugt über zumindest 80 % der Breite des Fahrzeuges und im Hinblick auf die vorstehend beschriebenen bevorzugten Ausführungsformen der Breite (Länge) der Radachse bzw. der Breite des Trailers.

Nach einer Ausführungsvariante ist das flächige Luftleitelement mit seiner Befestigungsseitenkante lösbar an dem Fahrzeug angeschlossen bzw. befestigt. Dabei ist das flächige Luftleitelement vorzugsweise über eine lösbare Formschlussverbindung an dem Fahrzeug angeschlossen bzw. befestigt. Grundsätzlich kann das flächige Luftleitelement der erfindungsgemäßen Luftleitvorrichtung aber auch fest bzw. unlösbar mit dem Fahrzeug verbunden sein. Eine Ausführungsvariante der Erfindung ist dadurch gekennzeichnet, dass das flächige Luftleitelement außer über die eine Befestigungsseitenkante zusätzlich noch über zumindest ein Haltelement an dem Fahrzeug angeschlossen bzw. befestigt ist. Dabei ist das zumindest eine Halteelement zweckmäßigerweise mit Abstand zu der Befestigungsseitenkante an dem Luftleitelement fixiert. Bei dem Halteelement kann es sich beispielsweise um ein federelastisches Halteelement handeln. Grundsätzlich kann das Halteelement aber auch ein Seil, eine Kette, ein Stab oder dergleichen sein. Vorzugsweise ist das Halteelement mit einem Ende an der Unterseite des flächigen Luftleitelementes angeschlossen und mit dem anderen Ende an das Fahrzeug angeschlossen. Es liegt im Rahmen der Erfindung, dass das Halteelement - insbesondere das Halteelement in Form eines Seils, einer Kette oder dergleichen - einen Anschlag bei der Überführung des Luftleitelementes aus der Ruheposition in die Fahrtposition festlegt bzw. definiert. Das Halteelement verhindert insoweit, dass das flächige Luftleitelement unter Einwirkung des Fahrtwindes über die gewünschte Fahrtposition hinaus bewegt wird bzw. angehoben wird.

Gegenstand der Erfindung ist auch ein Kraftfahrzeug, insbesondere ein Lastkraftwagen mit zumindest einer erfindungsgemäßen Luftleitvorrichtung mit zumindest einem flächigen Luftleitelement. Besonders bevorzugt weist das Kraftfahrzeug bzw. der Lastkraftwagen einen Trailer auf und vorzugsweise ist die erfindungsgemäße Luftleitvorrichtung mit dem zumindest einen flächigen Luftleitelement an dem Trailer des Lastkraftwagens befestigt bzw. angeschlossen. Es liegt im Rahmen der Erfindung, dass ein flächiges Luftleitelement an zumindest einer Radachse des Trailers vorgesehen ist. Weiterhin liegt es im Rahmen der Erfindung, dass zumindest ein flächiges Luftleitelementes an einer Dachkante an der Vorderseite des Trailers angeschlossen ist.

Der Erfindung liegt die Erkenntnis zugrunde, dass mit der erfindungsgemäßen Kraftfahrzeug-Luftleitvorrichtung eine sehr effektive und funktionssichere Reduzierung des Luftwiderstandes eines Kraftfahrzeuges und insbesondere eines Lastkraftwagens und vorzugsweise eines Trailers eines Lastkraftwagens erzielt werden kann. Besondere Bedeutung kommt dabei dem erfindungsgemäßen flächigen Luftleitelement zu, das unter Einwirkung des Fahrtwindes und bevorzugt lediglich unter Einwirkung des Fahrtwindes aus seiner Ruheposition in seine Fahrtposition überführbar ist. Diese Überführung ist überraschend einfach und präzise möglich. Der Erfindung liegt weiterhin die Erkenntnis zugrunde, dass mit relativ einfachen Mitteln und vor allem ohne aufwendige Stellelemente oder Aktuatorelemente eine effektive Reduzierung des Luftwiderstandes eines Fahrzeuges möglich ist. Von besonderer Bedeutung ist dabei, dass diese effektive Reduzierung des Luftwiderstandes bzw. Strömungswiderstandes auf wenig aufwendige und vor allem kostengünstige Weise realisierbar ist. Insbesondere die Materialkosten bzw. Baukomponentenkosten halten sich im Rahmen der Erfindung in Grenzen. Im Vergleich zu den eingangs genannten aus dem Stand der Technik bekannten Maßnahmen kann auf großvolumige aufwendige Verkleidungen verzichtet werden. Vielmehr werden erfindungsgemäß vorhandene Fahrzeugkomponenten durch Anbringung der erfindungsgemäßen Luftleitelemente gleichsam in aerodynamisch wirksame Fahrzeugkomponenten verwandelt. Von daher wird im Rahmen der Erfindung für diese betroffenen Fahrzeugkomponenten eine Mehrfachnutzung erreicht, indem eine aerodynamische Eigenschaft hinzuaddiert wird. - Im Ergebnis zeichnet sich die erfindungsgemäße Kraftfahrzeug-Luftleitvorrichtung durch hohe Effizienz und Funktionssicherheit sowie zugleich durch geringen Aufwand und Kostengünstigkeit aus.

Nachfolgend wird die Erfindung anhand einer lediglich ein Ausführungsbeispiel darstellenden Zeichnung näher erläutert. Es zeigen in schematischer Darstellung:
- Fig. 1: eine Seitenansicht eines Lastkraftwagens aus Zugmaschine und Trailer mit erfindungsgemäßen Luftleitvorrichtungen,
- Fig. 2: eine perspektivische Unteransicht des Lastkraftwagens gemäß Fig. 1 mit Luftleitvorrichtungen an der Unterseite des Trailers,
- Fig. 3: eine Unteransicht des Lastkraftwagens nach den Fig. 1 und 2,
- Fig. 4: ein vergrößerter Ausschnitt aus der Fig. 1 mit erfindungsgemäßen Luftleitvorrichtungen an der Unterseite des Trailers, teilweise im Schnitt,
- Fig. 5: eine Luftleitvorrichtung gemäß Fig. 4 im Schnitt,
- Fig. 6: ein vergrößerter Ausschnitt aus der Fig. 1 mit einer Luftleitvorrichtung an der vorderen Dachkante des Trailers mit dem Luftleitelement in der Ruheposition,
- Fig. 7: eine perspektivische Draufsicht auf den Gegenstand nach Fig. 6 mit dem Luftleitelement in der Fahrtposition,
- Fig. 8: den Gegenstand nach Fig. 6 mit dem Luftleitelement in der Fahrt-position und mit schematisch angedeuteten Strömungsverhältnissen und
- Fig. 9: eine vergrößerte Darstellung der Luftleitvorrichtung in der Ausführungs-form nach den Fig. 7 und 8 im Schnitt.

In den Figuren ist ein Lastkraftwagen (LKW) 1 mit einer Zugmaschine 2 und einem daran angeschlossenen Trailer 3 gezeigt. Der Lastkraftwagen 1 ist mit erfindungsgemäßen Kraftfahrzeug-Luftleitvorrichtungen 4 mit jeweils zumindest einem flächigen Kraftfahrzeug-Luftleitelement 5 aus einem dünnwandigen Material ausgerüstet. Ein flächiges Luftleitelement 5 mag nach bevorzugter Ausführungsform und im Ausführungsbeispiel eine Dicke von 1 bis 8 mm aufweisen sowie bevorzugt eine Fläche von 0,5 m² bis 2 m². Zweckmäßigerweise und im Ausführungsbeispiel sind Luftleitelemente 5 mit der Maßgabe ausgestaltet und an den Trailer 3 des Lastkraftwagens 1 angeschlossen, dass sie im Fahrbetrieb des Lastkraftwagens 1 und Einwirkung des Fahrtwindes aus einer Ruheposition in eine Fahrtposition überführbar ist und zwar unter Reduzierung des Strömungswiderstandes des Lastkraftwagens 1 bzw. des Trailers 3. Ein Luftleitelement 5 besteht nach einer Ausführungsform und im Ausführungsbeispiel aus Gummi. Es ist vorzugsweise und im Ausführungsbeispiel mit der Maßgabe ausgebildet, dass es im Fahrbetrieb des Fahrzeuges bzw. des Lastkraftwagens 1 unter Einwirkung des Fahrtwindes elastisch verformbar ist und zwar unter Reduzierung des Strömungswiderstandes des Fahrzeuges bzw. des Lastkraftwagens 1.

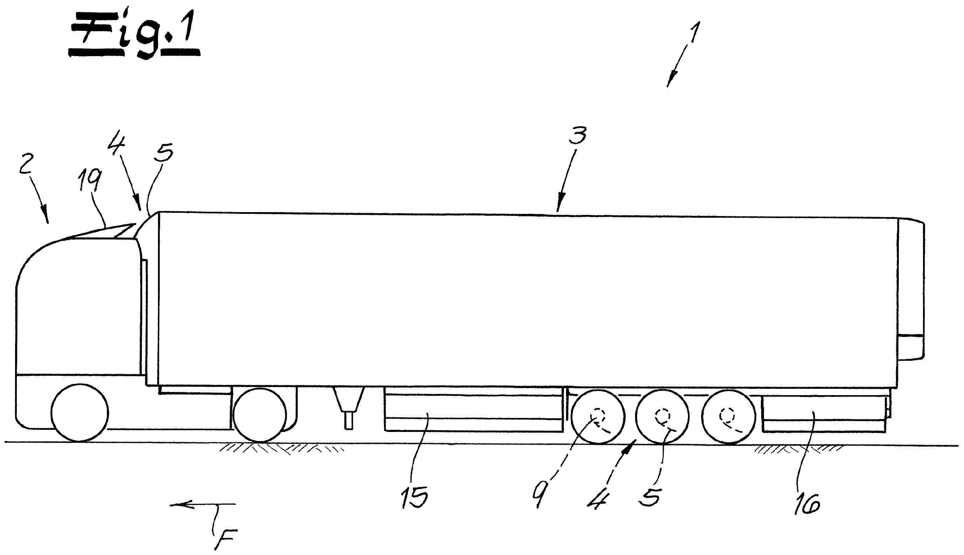

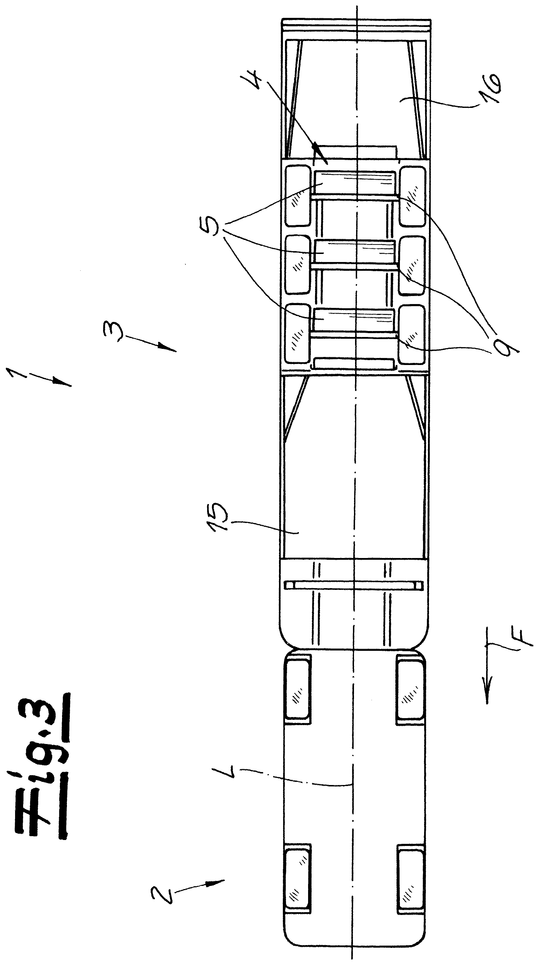

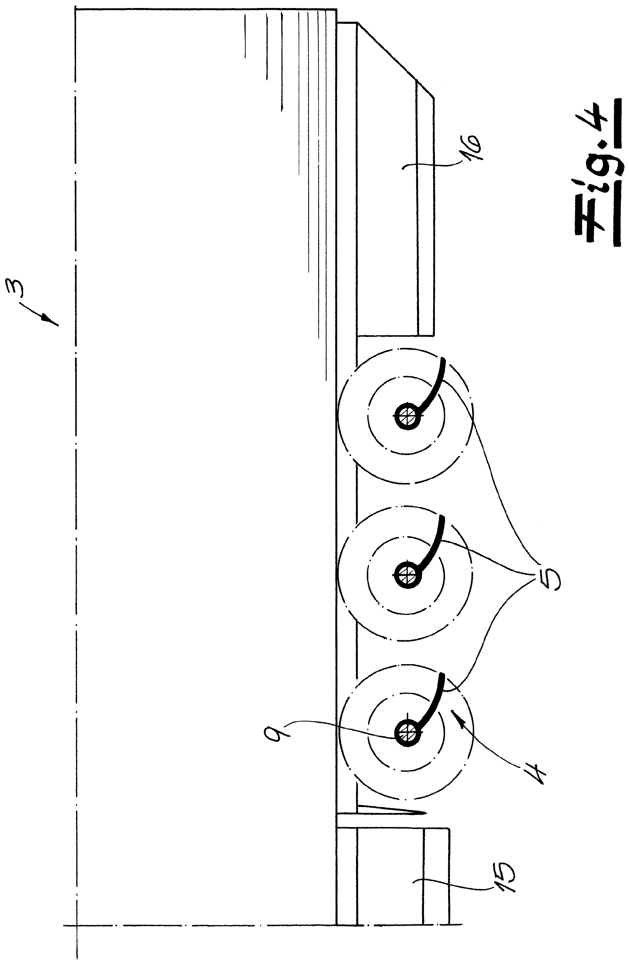

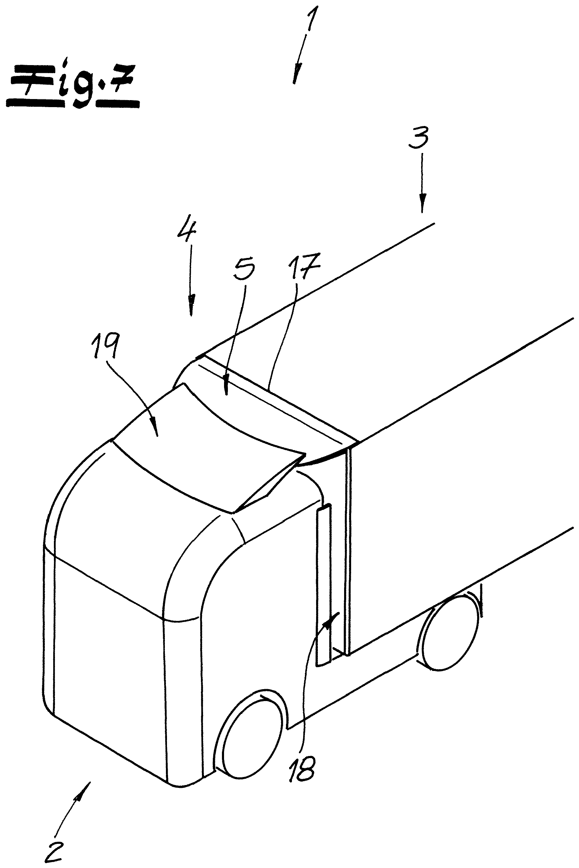

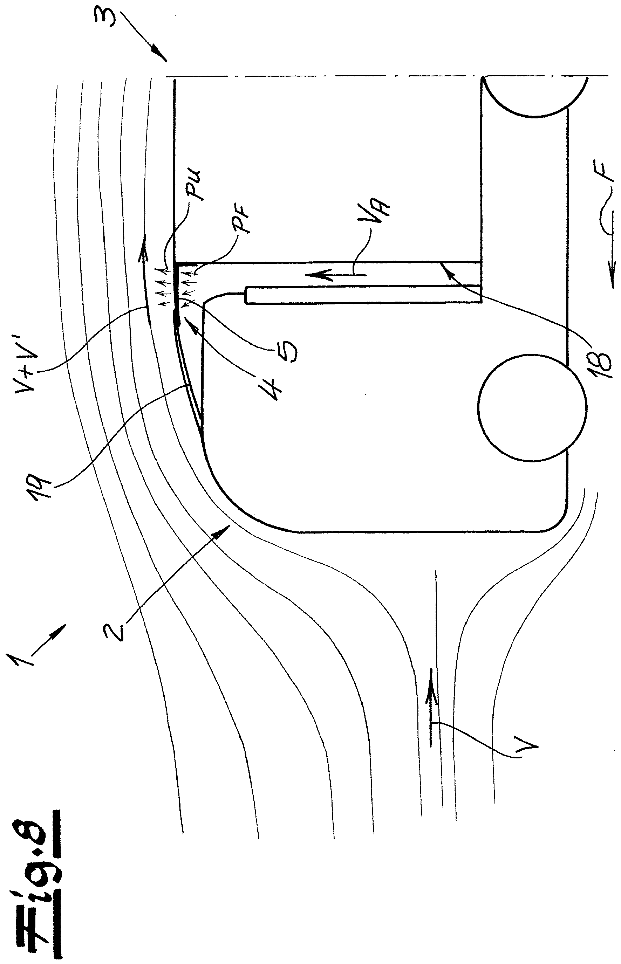

Nach sehr bevorzugter Ausführungsform und im Ausführungsbeispiel ist ein Luftleitelement 5 in Bezug auf seine Seitenkanten über lediglich eine Seitenkante bzw. Befestigungsseitenkante 6 an einer Außenfläche 7 oder an einer Außenkante 8 des Lastkraftwagens 1 bzw. des Trailers 3 angeschlossen und befestigt. Vorzugsweise und in den Ausführungsbeispielen nach den Fig. 1 bis 9 ist die Befestigungsseitenkante 6 des Luftleitelementes 5 im montierten Zustand des Luftleitelementes 5 senkrecht zur Fahrzeuglängsachse L bzw. senkrecht zur Fahrtrichtung F angeordnet. Die Befestigungsseitenkante 6 ist dabei bevorzugt und im Ausführungsbeispiel linear ausgebildet.

In den Fig. 1 bis 5 ist insbesondere ein Ausführungsbeispiel dargestellt, bei dem flächige Luftleitelemente 5 an den Radachsen 9 des Trailers 3 angeschlossen bzw. befestigt sind. Dabei ist jeweils ein flächiges Luftleitelement 5 an einer Radachse 9 angeschlossen bzw. befestigt und dieses Luftleitelement 5 erstreckt sich vorzugsweise und im Ausführungsbeispiel jeweils entlang der Längsrichtung dieser Radachse 9. Empfohlenermaßen und im Ausführungsbeispiel ist an der Befestigungsseitenkante 6 eines Luftleitelementes 5 jeweils ein flächiges Anschlusselement 10 angeschlossen, mit dem das Luftleitelement 5 mit seiner Befestigungsseitenkante 6 an der Außenfläche 7 der jeweiligen Radachse 9 angeschlossen bzw. befestigt ist. Zweckmäßigerweise und im Ausführungsbeispiel umgreift dabei das flächige Anschlusselement 10 die zugeordnete Radachse 9 vollständig und bevorzugt formschlüssig. Empfohlenermaßen und im Ausführungsbeispiel ist ein Fixierungsende 11 des Anschlusselementes 10 an der Unterseite 12 des flächigen Luftleitelementes 5 fixiert. Vorzugsweise und im Ausführungsbeispiel ist an der Oberseite 13 des Luftleitelementes 5 ein Stabilisierungssteg 14 angeordnet, mit dessen Hilfe die Form des flächigen Luftleitelementes 5 stabilisiert wird und der insbesondere ein Durchhängen des flächigen Luftleitelementes 5 in Richtung Erdboden und somit ein Schleifen des Luftleitelementes 5 auf dem Erdboden verhindert. Der Stabilisierungssteg 14 ist bevorzugt und im Ausführungsbeispiel senkrecht zu der Befestigungsseitenkante 6 des Luftleitelementes 5 orientiert. Es liegt im Übrigen im Rahmen der Erfindung, dass sich das flächige Luftleitelement 5 über zumindest 70 % der Länge der zugeordneten Radachse 9 erstreckt. In der Fig. 5 ist erkennbar, dass sich nach empfohlener Ausführungsform die Dicke D des Luftleitelementes 5 von der Befestigungsseitenkante 6 zu der gegenüberliegenden Seitenkante hin reduziert und zwar bevorzugt und im Ausführungsbeispiel kontinuierlich reduziert. Diese bevorzugte Verschlankung des Luftleitelementes 5 hat sich im Rahmen der Erfindung bewährt.

Der Erfindung liegt die Erkenntnis zugrunde, dass die an den Radachsen 9 angeschlossenen Luftleitelemente 5 die aerodynamische Umströmung der Radachse 9 im Fahrbetrieb des Fahrzeuges bzw. des Trailers 3 beachtlich verbessern. Es hat sich gezeigt, dass die Wirkung besonders effektiv ist, wenn vor und hinter den Radachsen 9 - vorzugsweise des Trailers 3 - ein vorderer Palettenkasten 15 und ein hinterer Palettenkasten 16 angeordnet ist. Es liegt im Rahmen der Erfindung, dass das flächige Luftleitelement 5 an der zugeordneten Radachse 9 drehbar gelagert ist und zwar zweckmäßigerweise mit Spiel (bevorzugte drehende Loslagerung mit Spiel). Bei stehendem Fahrzeug (Ruheposition) hängen die Luftleitelemente 5 nach unten und so kann beispielweise Eis und Schnee daran abgleiten und Wartungsarbeiten am Unterboden können problemlos durchgeführt werden. Im Fahrbetrieb und insbesondere bei Fahrgeschwindigkeiten ab mindestens 80 km/h liegen Druckkräfte auf der in Fahrtrichtung ausgerichteten Unterseite 12 des Luftleitelementes 5 an. Dadurch wird das Luftleitelement 5 aus seiner Ruheposition in die Fahrtposition überführt und dort biegt es sich zweckmäßigerweise in einer gewölbten Kurve nach oben, so dass sich bevorzugt eine kontinuierlich gekrümmte Form des Luftleitelementes 5 ergibt. Entlang der Unterseiten 12 der auf diese Weise ausgerichteten Luftleitelemente 5 kann die Strömung effektiv entlang der Fahrzeuglängsachse L abgleiten. Die Strömung gelangt dabei weitestgehend verlustfrei von einem Luftleitelement 5 zu der Unterseite 12 des nächsten Luftleitelementes 5 und durch dieses verbesserte Abfließen der Strömung und die entsprechende Abschirmung der Radachsen 9 wird im Ergebnis eine effektive Reduzierung des Strömungswiderstandes des Fahrzeuges bzw. des Trailers 3 erzielt.

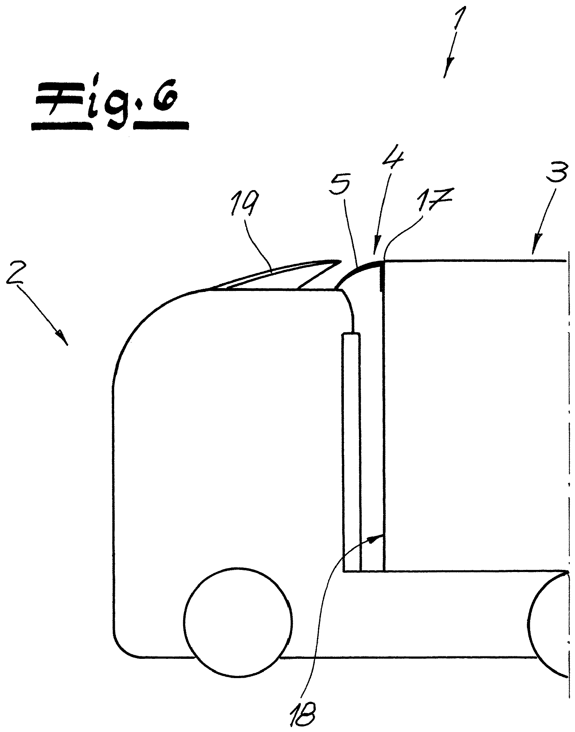

Insbesondere die Fig. 6 bis 9 veranschaulichen eine weitere empfohlene Ausführungsform der Erfindung. Bei dieser Ausführungsform ist ein flexibles flächiges Luftleitelement 5 an der senkrecht zur Fahrzeuglängsachse L und zur Fahrtrichtung angeordneten vorderen Dachkante 17 des Trailers 3 angeschlossen bzw. befestigt. Nach bevorzugter Ausführungsform und im Ausführungsbeispiel ist auch hier an der Befestigungsseitenkante 6 des Luftleitelementes 5 ein flächiges Anschlusselement 10 angeschlossen und mit diesem flächigen Anschlusselement 10 wird das Luftleitelement 5 an der Vorderseite 18 des Trailers 3 fixiert. Es liegt im Rahmen der Erfindung, dass das Luftleitelement 5 und das Anschlusselement 10 aus dem gleichen Material bestehen. In diesem Ausführungsbeispiel ist an der Unterseite 12 des Luftleitelementes 5 ein Stabilisierungssteg 14 vorgesehen, der die Form des flächigen Luftleitelementes 5 stabilisiert und insbesondere ein Durchhängen des Luftleitelementes 5 nach unten begrenzt. Vorzugsweise und auch in diesem Ausführungsbeispiel reduziert sich die Dicke D des Luftleitelementes 5 von der Befestigungsseitenkante 6 zur gegenüberliegenden Seitenkante hin und zwar bevorzugt kontinuierlich. Es ist erkennbar, dass das Luftleitelement 5 lediglich über seine Befestigungsseitenkante 6 an den Trailer 3 angeschlossen ist. Zweckmäßigerweise und im Ausführungsbeispiel erstreckt sich das Luftleitelement 5 über die gesamte Breite bzw. im Wesentlichen über die gesamte Breite des Trailers 3.

Bei Stillstand oder langsamer Fahrt des Lastkraftwagens 1 ragt das Luftleitelement 5 bei dieser Ausführungsform zweckmäßigerweise in gebogener Form in den Spalt zwischen Trailer 3 und Zugmaschine 2 (Ruheposition des Luftleitelementes 5 in Fig. 6). Dies hat auch den Vorteil, dass bei langsamen Rangiergeschwindigkeiten des Lastkraftwagens 1 die Zugmaschine 2 frei schwenken kann und vorteilhafterweise kein Kontakt zwischen dem Luftleitelement 5 und der Zugmaschine 2 erfolgt. - Bei zunehmender Fahrgeschwindigkeit des Lastkraftwagens 1 bzw. im Fahrbetrieb erhöht sich die Strömung V und aufgrund der Umströmung bzw. dachseitigen Umströmung der Zugmaschine 2 erfolgt eine Beschleunigung der Strömung (V + V') um die außenliegenden Kanten der Zugmaschine 2 bzw. des auf dem Dach der Zugmaschine 2 angeordneten Windabweisers 19. Diese Beschleunigung der Strömung führt zu einem Unterdruckbereich pᵤ im Dachbereich der Zugmaschine 2 und des Trailers 3. Aufgrund dieses Unterdruckes entsteht im Spalt zwischen der Zugmaschine 2 und dem Trailer 3 eine nach oben gerichtete Strömung V_{A} (Aufwärtsströmung) und diese Strömung V_{A} erzeugt an der Unterseite 12 des Luftleitelementes 5 eine Druckkraft p_{F} und aufgrund dieser Druckkraft p_{F} wird das Luftleitelement 5 sowohl angehoben als auch durch Verformung bzw. elastische Verformung in eine weniger gekrümmte Form überführt. Zweckmäßigerweise wird das Luftleitelement 5 bei höheren Fahrgeschwindigkeiten soweit angehoben, dass es berührend mit dem unterseitigen Bereich des Windabweisers 19 in Kontakt kommt. Der Windabweiser 19 funktioniert dabei auch als Anschlagelement und verhindert ein weiteres Anheben des Luftleitelementes 5. Durch die bündige Anordnung von Windabweiser 19 und Luftleitelement 5 wird der Spalt zwischen Zugmaschine 2 und Trailer 3 im Wesentlichen verschlossen. Aufgrund dieser Anordnung erfolgt gleichsam ein tangentialer Strömungsübergang von dem Windabweiser 19 zum Luftleitelement 5 und weiter zum Dach des Trailers 3, so dass sich im Ergebnis eine sehr effektive Reduzierung des Strömungswiderstandes des Lastkraftwagens 1 bzw. des Trailers 3 ergibt.

Gemäß einer sehr bevorzugten Ausführungsform der Erfindung kann das gleiche Aggregat aus einem Luftleitelement 5 und einem an der Befestigungsseitenkante 6 des Luftleitelementes 5 angeschlossenen flächigen Anschlusselement 10 sowohl als Luftleitvorrichtung 4 an den Radachsen 9 als auch als Luftleitvorrichtung 4 an der vorderen Dachkante 17 des Trailers 3 eingesetzt werden. In dem einen Fall wird das flächige Anschlusselement 10 um die Radachse 9 geschlungen und in dem anderen Fall wird das flächige Anschlusselement 10 an der Vorderseite 18 des Trailers 3 fixiert.

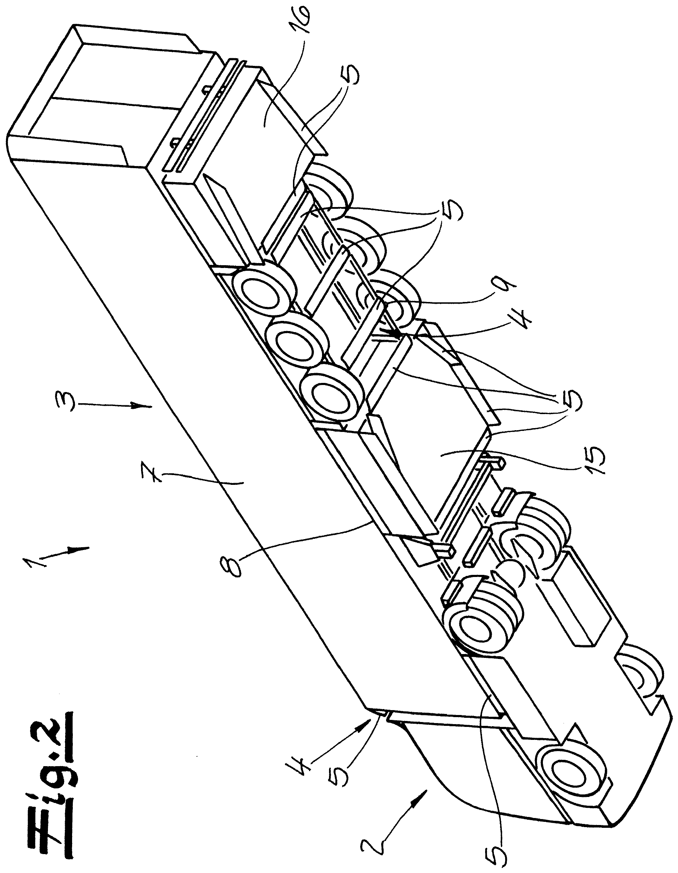

Insbesondere in der Fig. 2 sind im Übrigen weitere an den Trailer 3 angeschlossene Luftleitvorrichtungen 4 mit jeweils einem flächigen Luftleitelement 5 erkennbar. Diese Luftleitelemente 5 sind insbesondere an Außenflächen 7 bzw. Außenkanten 8 des Trailers 3 an der Unterseite des Trailers 3 angeschlossen bzw. fixiert.

## Patentansprüche

1. Kraftfahrzeug-Luftleitvorrichtung mit zumindest einem flächigen Kraftfahrzeug-Luftleitelement (5) aus einem dünnwandigen Material, wobei das Luftleitelement (5) eine Fläche von mindestens 0,05 m² und von maximal 5 m², vorzugsweise von mindestens 0,1 m² und von maximal 2 m² aufweist,
wobei das Luftleitelement (5) hauptsächlich über eine Befestigungskante bzw. Befestigungsseitenkante (6) an einer Außenfläche (7) und/oder an einer Außenkante (8) des Fahrzeuges anschließbar bzw. befestigbar ist.
und wobei das Luftleitelement (5) mit der Maßgabe ausgestaltet und/oder anschließbar ist, dass es im Fahrbetrieb des Fahrzeuges unter Einwirkung des Fahrtwindes aus zumindest einer Ruheposition in eine von der Ruheposition verschiedene Fahrtposition überführbar ist und zwar insbesondere unter Reduzierung des Strömungswiderstandes in die Fahrtposition überführbar ist.

2. Luftleitvorrichtung nach Anspruch 1, wobei das Luftleitelement (5) eine Dicke D von 0,05 bis 50 mm, vorzugsweise von 0,5 bis 30 mm und bevorzugt von 1 bis 10 mm aufweist.

3. Luftleitvorrichtung nach einem der Ansprüche 1 oder 2, wobei das Luftleitelement (5) aus einem flexiblen Material besteht und dieses Material vorzugsweise aus der Gruppe "Gummi, Kautschuk, Kunststoff, faserverstärkter und/oder gewebeverstärkter Kunststoff, Metallfolie" ausgewählt ist.

4. Luftleitvorrichtung nach einem der Ansprüche 1 bis 3, wobei das Luftleitelement (5) mit der Maßgabe ausgebildet und/oder anschließbar ist, dass es im Fahrbetrieb des Fahrzeuges unter Einwirkung des Fahrtwindes verformbar ist bzw. elastisch verformbar ist und zwar insbesondere unter Reduzierung des Strömungswiderstandes des Fahrzeuges verformbar ist bzw. elastisch verformbar ist.

5. Luftleitvorrichtung nach einem der Ansprüche 1 bis 4, wobei das Luftleitelement (5) über lediglich die Befestigungskante bzw. Befestigungsseitenkante (6) oder im Wesentlichen lediglich über die Befestigungskante bzw. Befestigungsseitenkante (6) an einer Außenfläche (7) und/oder an einer Außenkante (8) des Fahrzeuges anschließbar ist bzw. befestigbar ist.

6. Luftleitvorrichtung nach einem der Ansprüche 1 bis 5, wobei sich die Befestigungskante bzw. Befestigungsseitenkante (6) im montierten Zustand des Luftleitelementes (5) quer zur Fahrzeuglängsachse (L) bzw. quer zur Fahrtrichtung (F) und vorzugsweise senkrecht bzw. im Wesentlichen senkrecht zur Fahrzeuglängsachse (L) bzw. zur Fahrtrichtung (F) erstreckt.

7. Luftleitvorrichtung nach einem der Ansprüche 1 bis 6, wobei die Befestigungskante bzw. die Befestigungsseitenkante (6) linear bzw. im Wesentlichen linear ausgebildet ist.

8. Luftleitvorrichtung nach einem der Ansprüche 1 bis 7, wobei das Luftleitelement (5) über zumindest 50 %, vorzugsweise über zumindest 60 % und bevorzugt über zumindest 70 % seiner Erstreckung in Richtung einer Befestigungskante bzw. Befestigungsseitenkante (6) an dem Fahrzeug anschließbar bzw. befestigbar ist.

9. Luftleitvorrichtung nach einem der Ansprüche 1 bis 8, wobei das Luftleitelement (5) mit der Befestigungskante bzw. Befestigungsseitenkante (6) unmittelbar und ohne Zwischenschaltung von Verbindungselementen an dem Fahrzeug anschließbar bzw. befestigbar ist.

10. Luftleitvorrichtung nach einem der Ansprüche 1 bis 9, wobei das Luftleitelement (5) an einer Radachse (9) des Fahrzeuges anschließbar bzw. befestigbar ist und wobei sich das Luftleitelement (5) vorzugsweise entlang der Längsrichtung der Radachse (9) erstreckt.

11. Luftleitvorrichtung nach einem der Ansprüche 1 bis 10, wobei das Luftleitelement (5) an einer quer zur Fahrzeuglängsachse (L) bzw. quer zur Fahrtrichtung (F) und bevorzugt senkrecht bzw. im Wesentlichen senkrecht zur Fahrzeuglängsachse (L) bzw. zur Fahrtrichtung (F) angeordneten Dachkante (17) des Fahrzeuges anschließbar bzw. befestigbar ist.

12. Luftleitvorrichtung nach Anspruch 11, wobei das Luftleitelement an einer Dachkante (17) an der Vorderseite (18) des Fahrzeuges anschließbar bzw. befestigbar ist.

13. Luftleitvorrichtung nach einem der Ansprüche 1 bis 12, wobei das Luftleitelement (5) mit seiner Befestigungskante bzw. Befestigungsseitenkante (6) lösbar an dem Fahrzeug anschließbar bzw. befestigbar ist und vorzugsweise über eine lösbare Formschlussverbindung an dem Fahrzeug anschließbar bzw. befestigbar ist.

14. Luftleitvorrichtung nach einem der Ansprüche 1 bis 13, wobei das Luftleitelement (5) außer mit der einen Befestigungskante bzw. Befestigungsseitenkante (6) zusätzlich noch über zumindest ein Halteelement an dem Fahrzeug befestigt ist und wobei das zumindest eine Halteelement mit Abstand zu der Befestigungskante bzw. Befestigungsseitenkante (6) an dem Luftleitelement (5) fixiert ist.

15. Luftleitvorrichtung nach Anspruch 14, wobei das Halteelement einen Anschlag nach der Überführung des Luftleitelementes (5) aus der Ruheposition in die Fahrtposition festlegt bzw. definiert.

16. Kraftfahrzeug, insbesondere Lastkraftwagen, mit zumindest einer Luftleitvorrichtung nach einem der Ansprüche 1 bis 15.

17. Kraftfahrzeug nach Anspruch 16, wobei die Luftleitvorrichtung (4) bzw. das Luftleitelement (5) an dem Trailer (3) eines Lastkraftwagens (1) befestigt ist bzw. angeschlossen ist.
